# EUROPÄISCHE PATENTANMELDUNG

(11) **EP 4 760 569 A1**
(43) Veröffentlichungstag der Anmeldung: **17.06.2026**
(21) Anmeldenummer: 25211783.3
(22) Anmeldetag: 28.10.2025
(51) Int. Cl.: G06F 21/56, H04L 51/212

(54) **VERFAHREN UND SYSTEM ZUM SCHUTZ VOR POTENZIELL SCHÄDLICHEN ODER BETRÜGERISCHEN E-MAILS**

(30) Priorität: 10.12.2024 DE 102024137014
(71) Anmelder: Franz Haimer Maschinenbau KG, 86568 Hollenbach-Igenhausen (DE)
(72) Erfinder: Haimer, Andreas, 86568 Hollenbach-Igenhausen (DE)
(74) Vertreter: Schwarz, Wolfgang

(57) **Zusammenfassung**

**Die Erfindung betrifft ein Verfahren zum Schutz vor potenziell schädlichen oder betrügerischen E-Mails sowie ein solches System.**

Dabei wird eine bei einem Empfänger eingehende E-Mail daraufhin überprüft, ob es sich bei der eingehenden E-Mail um eine Antwort-E-Mail auf eine von dem Empfänger der eingehenden E-Mail vormalig versandte E-Mail handelt. Wenn die eingehende E-Mail als Antwort-E-Mail klassifiziert wurde, wird der Adressat der versandten E-Mail und der Absender der eingehenden E-Mail verglichen wird und/oder wenn die eingehende E-Mail nicht als Antwort-E-Mail klassifiziert wurde, wird der Absender der eingehenden E-Mail einer Bestandsprüfung unterzogen.

## Beschreibung

**Die Erfindung betrifft ein Verfahren zum Schutz vor potenziell schädlichen oder betrügerischen E-Mails sowie ein solches System.**

Mit der immensen Zunahme von digitaler Kommunikation, insbesondere von E-Mail-Kommunikation, - und damit auch einhergehend von einer Zunahme von Bedrohungen, wie Cyberangriffen und Phishing-Versuchen, - ist der Schutz von einer E-Mail-Kommunikation zu einer dringenden Notwendigkeit geworden.

Bekannt sind hierzu sogenannte E-Mail-Filter.

Ein E-Mail-Filter ist eine Software oder ein Dienst, der dazu verwendet wird, - methodisch -, beispielsweise aus dem Internet, eingehende oder, beispielsweise dorthin, ausgehende E-Mails automatisch zu sortieren, zu analysieren und/oder zu verwalten, basierend auf festgelegten Kriterien. E-Mail-Filter sind - funktionell - in der Regel zwischen (Firmen- )Firewalls und (firmen-)internen Rechnernetzen angeordnet - und "filtern" dort die E-Mails.

E-Mail-Filter werden vor allem eingesetzt, um unerwünschte E-Mails (Spam) zu blockieren, den Inhalt von E-Mails zu überprüfen oder bestimmte Nachrichten an spezielle Ordner weiterzuleiten.

Man kann verschiedene Arten von E-Mail-Filtern - nach unterschiedlichen Funktionen und Kriterien - unterscheiden, wie zum Beispiel:
**Spam-Filter** verhindern, dass unerwünschte E-Mails (Spam) in den Posteingang gelangen.

Spam-Filter analysieren verschiedene Merkmale einer E-Mail, wie den Absender, den Betreff, die Schlüsselwörter im Text, die Verwendung bestimmter Links oder die Häufigkeit von Anhängen. Wenn eine E-Mail als verdächtig eingestuft wird, landet sie entweder im Spam-Ordner oder wird direkt gelöscht.

**Inhaltsfilter** überprüfen den Inhalt von E-Mails auf bestimmte Keywords oder Phrasen.

Inhaltsfilter suchen nach bestimmten Wörtern oder Ausdrücken in der E-Mail und können Nachrichten basierend auf diesen Inhalten blockieren oder weiterleiten. Sie sind nützlich für den Schutz vor Phishing-Versuchen oder E-Mails mit gefährlichen Anhängen.

**Regelbasiertes Filtern/Regelbasierte Filter** organisieren E-Mails nach bestimmten Regeln oder Bedingungen.

Bei regelbasierten Filter können Benutzer eigene Regeln definieren, wie zum Beispiel das Weiterleiten von E-Mails von bestimmten Absendern an einen speziellen Ordner, das Markieren von Nachrichten mit bestimmten Wörtern im Betreff oder das Löschen von Nachrichten mit bestimmten Anhängen.

**Schwarz- und Weißlisten-Filter** verwalten vertrauenswürdige oder blockierte Absendern.

Eine Weißliste enthält eine Liste von vertrauenswürdigen E-Mail-Adressen oder Domains, deren Nachrichten immer zugestellt werden. Eine Schwarzliste enthält Absender oder Domains, deren E-Mails blockiert oder als Spam behandelt werden.

**Phishing-Filter** identifizieren Phishing-E-Mails, die versuchen, sensible Informationen zu stehlen.

Phishing-Filter analysieren den Inhalt und die Herkunft von E-Mails auf verdächtige Merkmale, wie z.B. gefälschte Absenderadressen, gefälschte Links oder die Aufforderung zur Eingabe persönlicher Daten.

E-Mail-Filter sind so ein wichtiger Bestandteil der (modernen, digitalen) E-Mail-Kommunikation, da sie helfen, die Benutzer vor unerwünschtem und schädlichem Inhalt - und daraus resultierenden Bedrohungen und daraus resultierenden, potentiellen immensen Schäden - zu schützen. Sie tragen zur Verbesserung der Effizienz und der Sicherheit im E-Mail-Verkehr bei.

Herkömmliche Methoden bei bekannten E-Mail-Filter zur Erkennung verdächtiger E-Mails stoßen aber oft an ihre Grenzen, da sie nicht in der Lage sind, subtile Manipulationen oder neue Angriffsmuster effektiv zu erkennen.

### Aufgabe der Erfindung

Es ist Aufgabe der Erfindung, eine Methode bereitzustellen, welche in der Lage ist, potenziell schädliche oder betrügerische E-Mails sicher, einfach und effektiv zu erkennen.

Diese Aufgabe wird gelöst durch ein **Verfahren zum Schutz vor potenziell schädlichen oder betrügerischen E-Mails** sowie durch ein solches **System zum Schutz vor potenziell schädlichen oder betrügerischen E-Mails** - mit den Merkmalen des jeweiligen unabhängigen Anspruchs.

Insbesondere könnte es sich bei der **potenziell schädlichen oder betrügerischen E-Mail** um eine von einem unbefugten Dritten versandte E-Mail handelt, welche von den unbefugten Dritten aus einer nicht an ihn gerichteten, aber von ihm abgefangenen E-Mail - als Antwort-E-Mail mit ggfls. schädlichem Inhalt - generiert (und an den ursprünglichen Absender zurückversandt) wurde.

Vorteilhafte Weiterbildungen der Erfindung sind Gegenstand abhängiger Ansprüche sowie der nachfolgenden Beschreibung - und beziehen sich sowohl auf das Verfahren wie auch auf das System.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen. Begriffe aus der Datenverarbeitung/IT sind - soweit nicht anders explizit definiert - nach üblichem Verständnis eines derartigen Fachmanns zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Bei dem **Verfahren zum Schutz vor potenziell schädlichen oder betrügerischen E-Mails** wird eine bei einem Empfänger eingehende E-Mail daraufhin überprüft wird, ob es sich bei der eingehenden E-Mail um eine Antwort-E-Mail auf eine von dem Empfänger der eingehenden E-Mail vormalig versandte E-Mail handelt.

Zweckmäßig ist es insbesondere, wenn diese Überprüfung, ob es sich bei der eingehenden E-Mail um eine Antwort-E-Mail auf eine von dem Empfänger der eingehenden E-Mail vormalig versandte E-Mail handelt, unter Verwendung einer Betreff-Angabe und/oder eines Ab-/Versenders oder Adressaten und/oder eines E-Mail-Verlaufs und/oder E-Mail-Historie bei der eingehenden E-Mail durchgeführt wird.

Derartige Informationen können beispielsweise mittels Bilderkennungsmittel (oder anderen digitalen Methoden, beispielsweise KI) in der eingehenden E-Mail erkannt - und diesbezüglich analysiert werden. Auch die Durchführung der Analyse an sich, insbesondere, ob es sich um eine Antwort-E-Mail handelt, kann mit KI durchgeführt werden.

Vereinfacht wird dies meist auch dadurch, dass derartige Informationen - in meist definierten Formaten und/oder mit definierten Inhalten - an vorbestimmen Positionen in der eingehenden E-Mail zu finden sind.

So weisen E-Mails bzw. deren Header in der Regel Betreffzeilen auf, welche den Betreff der E-Mail wiedergeben. Im Falle einer Antwort-E-Mail wird dort meist ein bestimmter Prefix, wie beispielswiese "AW:", dem Betreff vorangestellt. Dieser lässt beispielsweise erkennen, dass es sich bei der E-Mail um eine Antwort ("AW:") auf eine vormalig gesendete E-Mail handelt.

Im weiteren Verlauf der eingehenden E-Mail ist darüber hinaus auch meist der E-Mail-Verlauf bzw. die E-Mail-Historie, d.h., die vormalig gesendete E-Mail bzw. deren Inhalt (inkl. damaligem Header/Headerinformationen), wiedergegeben. Diese selbst bzw. deren Inhalt, wie auch dortige Betreff-Zeilen können helfen, die eingehende E-Mail als Antwort-E-Mail verifizieren.

Wenn die eingehende E-Mail dann als Antwort-E-Mail klassifiziert wurde, kann - um letztlich die Authentizität der E-Mail sicherzustellen - der Adressat der vormalig versandten E-Mail und der Absender der eingehenden E-Mail verglichen werden.

Andernfalls, d.h., wenn die eingehende E-Mail nicht als Antwort-E-Mail klassifiziert wurde, kann der Absender der eingehenden E-Mail einer Bestandsprüfung (s. dazu im Detail später) unterzogen werden.

Wenn - weiter - bei dem Vergleich des Adressaten der versandten E-Mail und des Absenders der eingehenden E-Mail (im Falle einer als Antwort-E-Mail klassifizierten eingehenden E-Mail) ein Unterschied festgestellt wird, kann eine Hinweisaktion, beispielsweise ein Ausgeben eines optischen oder akustischen Warnhinweises, insbesondere ein Hinweis auf eine potenziell schädliche oder betrügerische E-Mail, erfolgen.

Ferner kann es auch von Vorteil sein, wenn solche Hinweisaktionen bzw. Warnhinweise benutzerdefiniert und/oder individualisiert sind. Auch stufenförmig ausgegebene Hinweisaktionen bzw. Warnhinweise sind möglich. Benutzer können beispielsweise so die Empfindlichkeit der Hinweisaktionen/Warnhinweise anpassen, basierend auf ihren individuellen Präferenzen und Risikobereitschaften. Dies erhöht die Benutzerfreundlichkeit und (individuelle) Anpassungsfähigkeit bei dem Verfahren.

Ein solcher Unterschied (bei dem Vergleich des Adressaten der versandten E-Mail und des Absenders der eingehenden E-Mail (im Falle einer als Antwort-E-Mail klassifizierten eingehenden E-Mail)) kann beispielsweise in einem geänderten oder ergänzten Buchstaben (oder mehreren) bzw. einer geänderten Buchstabenfolge bzw. in einer lautmalerisch ähnlichen Buchstabenfolge bestehen. Insbesondere kleine und/oder schwer zu entdeckende Unterschiede können insbesondere auf eine "falsche" bzw. potentiell eine Bedrohung darstellende E-Mail hindeuten.

Andernfalls, d.h., wenn bei dem Vergleich des Adressaten der versandten E-Mail und des Absenders der eingehenden E-Mail (im Falle einer als Antwort-E-Mail klassifizierten eingehenden E-Mail) kein Unterschied festgestellt wird, kann die eingehende E-Mail als authentisch, insbesondere als authentische Antwort-E-Mail, klassifiziert werden.

Zweckmäßig ist es, wenn bei der Bestandsprüfung (im Falle einer als Nicht-Antwort-E-Mail klassifizierten eingehenden E-Mail) der Absender der eingehenden E-Mail mit anderen bei dem Empfänger bekannten bzw. bekannt vorliegenden E-Mail-Adressaten verglichen wird.

In der Regel führt der Empfänger ein "Adressbuch" (oder ähnliche Verzeichnisse), in welchem bisherige beim dem Empfänger verwendete bzw. bekannte Adressen (von Adressaten) gespeichert sind.

Wenn bei dem Vergleich bei der Bestandsprüfung dann ein Unterschied (zwischen dem Absender der eingehenden E-Mail und einem bzw. den anderen bei dem Empfänger bekannten bzw. bekannt vorliegenden E-Mail-Adressaten) festgestellt wird, kann eine Hinweisaktion, beispielsweise ein Ausgeben eines optischen oder akustischen Warnhinweises, durchgeführt wird.

Andernfalls, d.h., wenn bei dem Vergleich bei der Bestandsprüfung kein Unterschied festgestellt wird, d.h. vereinfacht ausgedrückt, der Absender der eingehenden E-Mail ist bei dem Empfänger bekannt, kann die eingehende E-Mail als authentisch klassifiziert werden.

Wenn bei dem Vergleich bei der Bestandsprüfung ein Unterschied festgestellt wird, kann insbesondere ein Grad des Unterschiedes und/oder einer Ähnlichkeit bestimmt werden.

Abhängig von dem Grad des Unterschiedes und/oder der Ähnlichkeit kann weiter eine diesbezüglich abgestimmte, bestimmte Hinweisaktion, beispielsweise ein Ausgeben eines bestimmten optischen oder akustischen Warnhinweises, durchgeführt werden.

Weiter kann so dann beispielsweise vorgesehen sein, dass, wenn der Grad des Unterschiedes und/oder der Ähnlichkeit einen geringen Unterschied und/oder eine große Ähnlichkeit anzeigt, ein Hinweis auf eine potenziell schädliche oder betrügerische E-Mail erfolgt. Insbesondere geringe - und so schwer zu entdeckende - Unterschiede bzw. große Ähnlichkeiten können auf eine "falsche" bzw. potentiell eine Bedrohung darstellende E-Mail hindeuten.

Wenn der Grad des Unterschiedes und/oder Ähnlichkeit einen großen Unterschied und/oder geringe bis gar keine Ähnlichkeit anzeigt, kann ein Hinweis auf einen potenziell neuen E-Mail-Kontakt erfolgen. D.h. vereinfacht ausgedrückt, der Absender der eingehenden E-Mail ist bei dem Empfänger bis dato unbekannt; es handelt sich um einen neuen Kontakt.

Hilfreich kann auch sein, wenn - bei Vergleichen - von dem Empfänger der eingehenden E-Mail vormalig versandte E-Mails - beispielsweise in einem Speicher - beim dem Empfänger gespeichert sind - und dort so für eine Analyse bzw. einen Vergleich (s. oben) zur Verfügung stehen.

Zweckmäßig ist es insbesondere, wenn (Über-)Prüfungen, Vergleiche und/oder Klassifikationen sowie die Generierung von Hinweisen, Hinweisaktion und/oder Warnhinweisen bei dem Verfahren (oder dem System) unter Verwendung einer KI bzw. lernenden Verfahren, wie beispielsweise auch neuronale Netze und Entscheidungsbäume, durchgeführt werden. Kurz, das Verfahren könnte KI basiert sein.

Derartige Lernende Verfahren weisen bzw. eine KI weist bis dato jetzt schon einen so hohen Entwicklungsstand auf, so dass insbesondere die (Über-) Prüfungen, Vergleiche und/oder Klassifikationen sowie die Generierung von Hinweisen, Hinweisaktion und/oder Warnhinweisen mittels solcher Verfahren hohe Zuverlässigkeit bzw. Effizienz und Effektivität zeigen.

KI basiert - könnte das Verfahren kontinuierlich lernen und seine Algorithmen verbessern, insbesondere indem es das Feedback von Benutzer, falsch-positiven und falsch-negativen Erkennungen sammelt und integriert. Wenn Benutzer beispielsweise angeben, dass eine E-Mail fälschlicherweise als schädlich oder sicher eingestuft wurde, könnte das System diese Informationen nutzen, um zukünftige Klassifizierungen zu verbessern.

Anders ausgedrückt, auch ist es insbesondere hier von Vorteil, wenn die KI bzw. das Lernende Verfahren eine Funktion enthält, die auch auf Feedbacks der Benutzer basiert, umso weiter die Erkennungsrate von schädlichen E-Mails kontinuierlich zu verbessern - und auch Fehlalarme zu minimieren.

Darüber hinaus kann sich so das Verfahren (und das System) an neue Bedrohungen anpassen und kontinuierlich aus Erfahrungen lernen, wodurch es immer effektiver wird.

Trainingsdaten stehen aufgrund der unzähligen E-Mail zuhauf zur Verfügung - und können so ein zuverlässige KI gewährleisten.

Ferner kann es sich als zweckmäßig erweisen, wenn zusätzlich eine Überprüfung des Inhalts der eingehenden E-Mail auf bekannte Schadsoftware-Signaturen durchführt.

Ferner ist es auch zweckmäßig, wenn eine Verhaltensanalyse des Absenders der eingehenden E-Mail durchgeführt wird, um das typische Kommunikationsmuster des Absenders zu erkennen - und Abweichungen, die auf eine möglicherweise verdächtige E-Mail-Adresse hinweisen könnten, zu identifizieren. Kommunikationsmuster können nicht nur innerhalb von E-Mail, sondern über andere digitale Kommunikationskanäle, wie soziale Medien und andere Messaging-Apps hinweg, um umfassendere Bedrohungsprofile zu erstellen.

So kann beispielsweise festgestellt werden, wenn ein Absender, der normalerweise kurze E-Mails sendet, plötzlich eine ungewöhnlich lange Nachricht verschickt. Diese Analyse kann insbesondere helfen, potenziell kompromittierte E-Mail-Konten zu identifizieren. Sie erhöht die Fähigkeit, komplexe und koordinierte Angriffe zu identifizieren.

Ungeachtet dessen, können (zusätzlich oder auch als alleiniger Schutzmechanismus) auch Sentiment-Analyse-Techniken auf E-Mail-Inhalte, d.h. auf solche von den eingehenden E-Mails, um subtile Anzeichen von Betrug oder Täuschung zu erkennen, die nicht durch reguläre Filter erfasst werden. Diese Technik analysiert den emotionalen Gehalt von (eingehenden) E-Mail-Nachrichten, um Anomalien oder verdächtige Muster zu entdecken, die auf Phishing oder Täuschung hinweisen. Sie kann helfen, subtile soziale Ingenieursangriffe zu erkennen, die nicht durch reguläre Keyword-basierten Filter erfasst werden.

Auch ist es vorteilhaft, wenn zusätzlich eine Überprüfung der eingehenden E-Mail auf ungewöhnliche Verhaltensweisen, wie z.B. ungewöhnlich häufiges Senden von Nachrichten oder ungewöhnlich große Dateianhänge, durchführt.

Ferner kann auch eine Risikoanalyse in Bezug auf die eingehende E-Mail und/oder deren Absender durchgeführt werden. Diese kann insbesondre verschiedene Faktoren wie die Domain-Reputation des Absenders, die IP-Adresse und die geografische Herkunft der E-Mail in die Bewertung der E-Mail einbeziehen. Diese Faktoren können zusammen eine Risiko-Scores generieren, die helfen, die Gefährlichkeit der eingehenden E-Mail besser einzuschätzen.

Ferner kann es zweckmäßig sein, wenn die eingehende E-Mail gesondert, insbesondere in einem Quarantäne-Bereich, gespeichert wird, insbesondere dann, wenn für eine eingehende E-Mail ein Hinweis, eine Hinweisaktion und/oder ein Warnhinweis erfolgt bzw. wenn eine eingehende E-Mail als nicht-authentisch klassifiziert wird (d.h., die E-Mail könnte eine potentiell bedrohliche E-Mai sein). Auch ein Löschen einer solchen E-Mail könnte angeraten sein.

Wird eine solche E-Mail gesondert gespeichert (, wodurch gewährleistet werden kann, dass eine solche E-Mail noch nicht ins Rechnernetz gelangt), so sie kann sie (dort) einer näheren, individuellen "manuellen" Prüfung unterzogen werden (vgl. ähnlich Spam/Spam-Filter, Spam-Ordner (s. oben)).

Vorteilhaft erscheint es insbesondere, wenn das Verfahren (bzw. das System) - für eingehende E-Mails - zwischen einer (Firmen-)Firewall und einem (firmen-)internen Netzwerk angeordnet ist.

D.h., nach außen hin, beispielsweise gegenüber einem Internet, wird das Netzwerk (beispielsweise eines Unternehmens) zunächst durch eine Firewall geschützt. Werden durch diese eingehende E-Mail nicht blockiert - und weitergegeben, so erfolgt das Verfahrens (bzw. System) - ähnlich einer zweiten Stufe eines mehrstufigen (Bedrohungs-)Schutzes. (Die Firewall wäre so als erste Stufe des Bedrohungsschutzes zu verstehen.) Durchläuft die eingehende E-Mail beide Stufe, erst dann kann sie ins interne Rechnernetz gelassen werden.

Der Sicherheitsschutz kann weiter noch erhöht werden, wenn beispielsweise auch eine Blockchain-basierte Verifizierung für E-Mails bzw. die eingehenden E-Mails realisiert ist, um die Authentizität der Absender zu sichern und Manipulationen zu verhindern. D.h., eine Blockchain-Technologie kann verwendet werden, um die Integrität und Authentizität von E-Mail-Absendern zu verifizieren. Jede E-Mail-Transaktion könnte in einer unveränderlichen, dezentralen Datenbank aufgezeichnet werden. Dies reduziert das Risiko von Manipulationen und Spoofing-Angriffen erheblich.

Eine weitere Sicherheitsebene kann implementiert werden, indem beispielsweise eine Multi-Faktor-Authentifizierung für verdächtige E-Mails einführt wird, die eine zusätzliche Bestätigung vom Absender erfordern.

Weiter kann auch vorgesehen werden, dass darüber hinaus auch Bedrohungsdaten von globalen Sicherheitsnetzwerken - in Echtzeit - bezogen werden, um aufkommende Bedrohungen frühzeitig zu erkennen. Dies ermöglicht so insbesondere eine proaktive Erkennung und Reaktion auf neu auftretende Bedrohungen.

Auch kann es zweckmäßig sein, eine Risikobewertung bei den eingehenden E-Mail durchzuführen, beispielsweise durch Vergabe von einem Risikobewertungsscore. D.h., es wird ein Score entwickelt, der die Gefährlichkeit eingehender E-Mails anhand von Faktoren wie Absender-Reputation, Inhaltsanalyse und historischen Daten bewertet. Ein algorithmisch ermittelter Score bewertet die Gefährlichkeit einer (eingehenden) E-Mail basierend auf verschiedenen Faktoren, wie Absender-Reputation, Inhaltsanalyse und historischen Daten. Er bietet eine quantifizierte Einschätzung des Risikos, fundierte Entscheidungen zu treffen.

Das **System** zum Schutz vor potenziell schädlichen oder betrügerischen E-Mails ist **eingerichtet zur** Durchführung des **Verfahrens** bzw. dessen Weiterbildungen.

Dabei erweist es sich als zweckmäßig, wenn das System skalierbar ist und sich an wachsende Benutzeranforderungen anpassen kann, insbesondere in großen Organisationen mit hohem E-Mail-Aufkommen.

Darüber hinaus kann es zweckmäßig sein, dass das System zusätzlich Funktionen zur Überprüfung des Inhalts der eingehenden E-Mail auf bekannte Schadsoftware-Signaturen und/oder ungewöhnliche Verhaltensweisen, wie z.B. ungewöhnlich häufiges Senden von Nachrichten oder ungewöhnlich große Dateianhänge, aufweist.

Auch eine Integration mit bestehenden Sicherheitslösungen und E-Mail-Diensten kann erfolgen, um so insbesondere eine nahtlose Implementierung und höhere Anpassungsfähigkeit an verschiedene IT-Infrastrukturen zu gewährleisten. So könnte das System insbesondere API-Schnittstellen bereitstellen, um sich nahtlos in bestehende E-Mail-Dienste und Sicherheitslösungen zu integrieren, was die Implementierung erleichtert und die Akzeptanz bei den Nutzern erhöht.

Ferner kann auch vorgesehen sein, dass eine zusätzliche Authentifizierungsschicht implementiert wird, indem Absender aufgefordert werden, sich bei verdächtigen E-Mails durch einen zweiten Kommunikationskanal zu verifizieren, bevor die E-Mail als authentisch eingestuft wird. Diese könnte beispielsweise eine Multi-Faktor-Authentifizierung umfassen, bei der eingehende E-Mails bzw. Absender, die als verdächtig erkannt werden, aufgefordert werden, ihre Identität durch einen zweiten Kommunikationskanal (wie z.B. eine SMS-Bestätigung) zu bestätigen, bevor die E-Mail als sicher eingestuft wird. Dies erhöht insbesondere die Sicherheit, indem es Angreifern erschwert wird, gefälschte Identitäten zu verwenden.

Vorteilhaft ist es auch, wenn das System eine benutzerfreundliche Oberfläche bietet, die es den Benutzern ermöglicht, Feedback zu geben, um das Verfahren bzw. dortige Algorithmen - zur Erkennung von Phishing und Betrug - weiter zu optimieren. Ein intuitives Interface kann den Benutzern helfen, einfacher mit dem System zu interagieren, Feedback zu geben und die Erkennungsalgorithmen zu verbessern. Durch Feedback-Schleifen könnten Benutzer das System über falsch-positive oder falsch-negative Erkennungen informieren, was wiederum die Genauigkeit des Systems erhöht.

Es erscheint insbesondere zweckmäßig, wenn das **System** unter Verwendung einer Software, welche insbesondere als Server-Installation oder als Cloud-Software oder als Applikations-Software bereitgestellt wird, realisiert ist.

Auch eine mobile Anwendung kann zweckmäßig sein, um die E-Mail-Sicherheit auch unterwegs zu überwachen und zu verwalten. Sie erhöht die Flexibilität und Reaktionsfähigkeit, besonders für Benutzer, die häufig mobil arbeiten.

Pilotprojekte mit ausgewählten Branchen können durchgeführt werden, um die Wirksamkeit des Systems in realen Szenarien zu testen und zu validieren.

Auch eine Echtzeitfähigkeit bei dem System und dem Verfahren kann vorteilhaft sein. D.h., das System bzw. das Verfahren ist in der Lage, die eingehenden E-Mails in Echtzeit zu analysieren - und Benutzer unmittelbar zu warnen, um Verzögerungen im Arbeitsablauf zu minimieren. D.h., die Fähigkeit, E-Mails in Echtzeit zu analysieren, kann entscheidend sein, um Benutzer schnell zu warnen und somit potenzielle Schäden oder Datenverluste zu verhindern. Dies könnte durch den Einsatz von schnellen Datenverarbeitungs- und Analyselösungen umgesetzt werden.

So können insbesondere auch (dynamische) Benutzer-Dashboards verwendet werden, das Benutzern Echtzeit-Statistiken über erkannte Bedrohungen, E-Mail-Verkehr und Systemaktivität bietet. Ein interaktives Dashboard kann so Echtzeit-Übersicht über Sicherheitswarnungen, Systemstatus und Bedrohungsstatistiken liefern. Benutzer erhalten einen klaren Überblick und können schneller auf potenzielle Bedrohungen reagieren.

Weiterhin kann auch von Bedeutung sein, dass das System Compliance- und Datenschutzbestimmungen, wie der DSGVO, einhält, beispielsweise dadurch, dass es die Verarbeitung personenbezogener Daten minimiert und transparent macht. So werden rechtliche Probleme vermieden - und das Vertrauen der Benutzer in das System gestärkt.

Weiterhin kann in Betracht gezogen werden, Partnerschaften mit etablierten Sicherheitsanbietern einzugehen, um die Reichweite und Implementierung des Systems zu stärken.

Die Erfindung adressiert so insbesondere die wachsende Bedrohung durch Cyberangriffe und bietet einen robusten, proaktiven Ansatz zur Sicherung der E-Mail-Kommunikation. Sie reagiert auf moderne Bedrohungen und technologische Fortschritte - und verbessert so einen umfassenderen Schutz vor schädlichen oder betrügerischen E-Mails.

Sie ist besonders wertvoll für Unternehmen und Organisationen, die täglich mit sensiblen Informationen umgehen und deren Schutz von höchster Priorität ist. KI basiert eröffnet darüber hinaus die Erfindung die Möglichkeit, sich an neue Bedrohungen anzupassen und kontinuierlich aus Erfahrungen lernen - und dadurch die Erkennungsrate von schädlichen oder betrügerischen E-Mails zu verbessern.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

### Es zeigen:

- FIG 1: eine Darstellung, welche ein System für eine Informationssicherheit bzw. einen Cyber-Schutz bei einer E-Mail-Kommunikation gemäß einer Ausführung verdeutlicht;
- FIG 2: eine (eingehende) E-Mail gemäß einer Ausführung;
- FIG 3: eine Sicherheits-Struktur für einen E-Mail-Filter bei einem (Rechner-)Netzwerk eines Unternehmens/der Firma gemäß einer Ausführung.

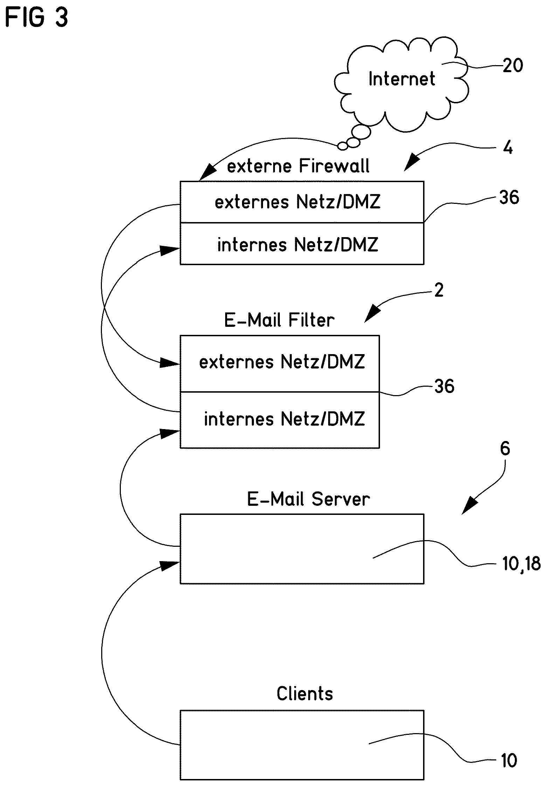

### - Informationssicherheit und Cyber-Schutz bei einer E-Mail-Kommunikation für ein (Firmen-)Rechnernetz (FIGen 1 und 2 sowie FIG 3)

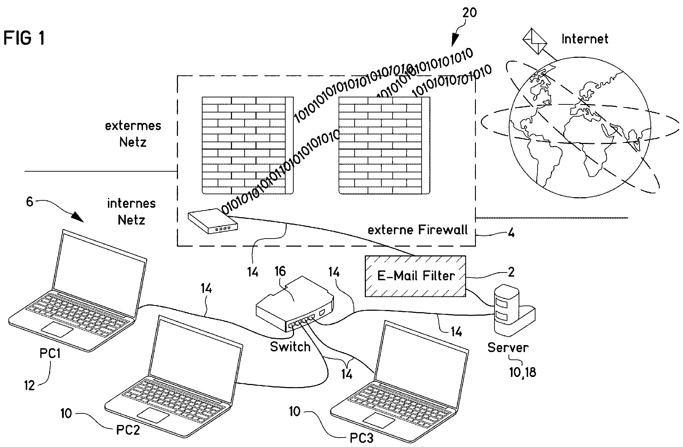

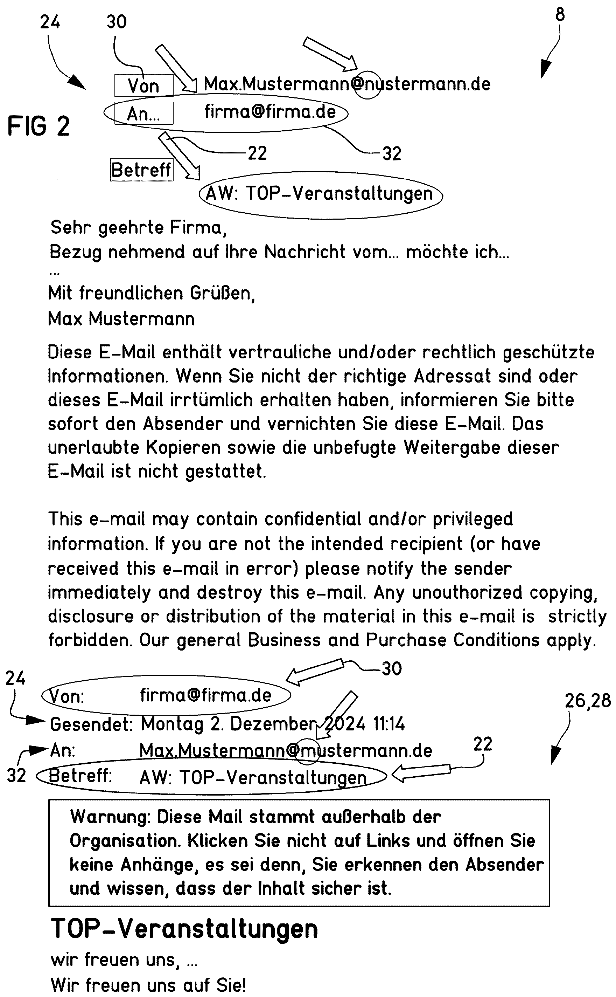

FIG 1 verdeutlicht ein System für eine Informationssicherheit bzw. einen Cyber-Schutz bei einer E-Mail-Kommunikation bei einem internen, mit einer Firewall 4 und einem E-Mail-Filter 2 gesicherten (Rechner-)Netzwerk 6 eines Unternehmens/einer Firma. FIG 2 zeigt eine in das Firmen-Netzwerk 6 eingehende, von dem E-Mail-Filter 2 analysierte E-Mail 8. FIG 3 zeigt eine alternative Sicherheits-Struktur/-Architektur für den E-Mail-Filter 2 bei dem (Rechner-)Netzwerk 6 des Unternehmens/der Firma.

FIG 1 verdeutlicht (in seinem unteren Teil) ein firmenübliches (Computer-)Rechnernetzwerk, kurz Rechnernetz (LAN) 6, - mit üblichen Geräten, wie PCs/Computer 10, Drucker 12, usw. (kurz bezeichnet als Knoten), die mit Kabeln 14 über Switches 16 (= Gerät mit vielen Netzwerkanschlüssen, welches Daten an die angeschlossenen Geräte innerhalb eines Netzwerks weiterleiten kann) verbunden sind. Natürlich können statt Kabel 14 auch WLAN-Funkverbindungen zum Einsatz kommen.

Einer der Computer 19 fungiert als Server 18 - und stellt spezielle Dienste (im LAN) (bezeichnet als Server-Programme) zur Verfügung, z.B. Dateien für die anderen Computer zu speichern oder ein Mail-System (E-Mail Server).

Mittels einer (externe) Firewall 4 wird der Netzwerkzugriff des Internets (externes Netz; WAN) 20 auf das Rechnernetz 6 beschränkt. Die Firewall 4 tut dies (in technischer Hinsicht), indem sie beispielsweise (Antwort-)Pakete durchlässt, die aus dem internen Netz 6 heraus angefordert wurden, und alle anderen Netzwerkpakete blockiert.

Als weitere Sicherung ist - funktionell zwischen der Firewall 4 und dem Rechnernetz 6 angeordnet - ein E-Mail-Filter 2 vorgesehen, welcher aus dem Internet 20 eingehende oder dorthin ausgehende E-Mails automatisch sortiert, analysiert und/oder verwaltet, basierend auf festgelegten Kriterien.

Neben bekannten Filterfunktionen (s. oben, z.B. Spam-Filter) sieht der E-Mail-Filter 2 auch einen besonderen Filter vor (Cyber-Schutz), welcher eingehende E-Mails 8 auf potentiell bedrohliche E-Mails - nach einem besonderen Verfahren zum Schutz vor potenziell schädlichen oder betrügerischen E-Mails, kurz nur "Verfahren" - prüft.

Insbesondere dort, wo der E-Mail-Filter 2 den Cyber-Schutz durchführt, d.h. bei dem Verfahren, arbeitet der E-Mail-Filter 2 KI basiert. D.h., insbesondere dort wo der E-Mail-Filter bzw. das Verfahren (Über-) Prüfungen, Vergleiche und/oder Klassifikationen durchführt sowie Hinweise, Hinweisaktionen und/oder Warnhinweise generiert, werden KI basierte Algorithmen bzw. lernende Verfahren eingesetzt.

### E-Mail-Filter

Bei dem E-Mail-Filter 2 bzw. bei dem Verfahren wird eine bei dem Rechnernetz 6 bzw. Server 18 (von der Firewall 4 nicht blockierte) eingehende E-Mail 8 zunächst daraufhin überprüft, ob es sich bei der eingehenden E-Mail 8 um eine Antwort-E-Mail auf eine von dem bzw. aus dem Rechnernetz 6 vormalig versandte E-Mail handelt.

Diese Überprüfung, ob es sich bei der eingehenden E-Mail 2 um eine Antwort-E-Mail handelt, wird, wie insbesondere FIG 2 verdeutlicht, unter Verwendung einer Betreff-Angabe/-Zeile, kurz Betreff, 22 bei/in der eingehenden E-Mail 8 durchgeführt.

Der E-Mail-Filter 2 bzw. das Verfahren analysiert dazu den Betreff 22 im Header 24 der eingehenden E-Mail 2, hier (vgl. FIG 2): "AW: TOP-Veranstaltungen".

Der E-Mail-Filter 2 bzw. das Verfahren erkennt bei seiner Analyse im Betreff 22 den Prefix, "AW:", welcher signalisiert/anzeigt, dass es sich um eine Antwort/Antwort-E-Mail auf eine vormalig gesendete E-Mail - mit dem vormaligen/ursprünglichen Betreff 22 "TOP-Veranstaltungen" handelt.

Im Weiteren - um die Redundanz des Ergebnisses zu erhöhen bzw. dieses weiter zu verifizieren - analysiert dann der E-Mail-Filter 2 bzw. das Verfahren auch den gesamten Inhalt der eingehenden E-Mail 8 selbst.

Hier sucht der E-Mail-Filter 2 bzw. das Verfahren in der eingehenden E-Mail 8 nach einem E-Mail-Verlauf bzw. einer E-Mail-Historie 26, welcher bzw. welche - in der eingehenden E-Mail 8 - im Anschluss an den originären Inhalt der eingehenden E-Mail 8 angeführt bzw. von dort ab weiter aufgeführt ist (vgl. FIG 2).

Dort eben erkennt der E-Mail-Filter 2 bzw. das Verfahren die vormalig gesendete/ursprüngliche bzw. originäre E-Mail 28 (und deren Header 24), wo der ursprüngliche bzw. originäre Betreff 22 "TOP-Veranstaltungen" zu finden ist.

Vormaliger Betreff 22 "TOP-Veranstaltungen" in der vormaligen E-Mail 28 und aktueller Betreff 22 "AW: TOP-Veranstaltungen" der eingehenden E-Mail 8 lassen erkennen, dass es sich bei der eingehenden E-Mail 8 um eine Antwort-E-Mail (betreffend "TOP-Veranstaltungen") auf die ursprüngliche, originäre E-Mail 28 handelt.

Der E-Mail-Filter 2 klassifiziert so die eingehende E-Mail 8 als Antwort-E-Mail.

Gleiches könnte auch aus dem vormaligen Versender 30, firma@firma.de, der ursprünglichen E-Mail 28, und dem aktuellen Adressaten 32, firm@firma.de, der eingehenden E-Mail 8 geschlossen werden.

Ob diese (jetzt so klassifizierte) Antwort-E-Mail allerdings tatsächlich von dem ursprünglichen Adressaten stammt, wird weiter nun von dem E-Mail-Filter 2 geprüft, könnte es sich doch um eine von einem unbefugten Dritten versandte E-Mail handelt, welche von diesem aus der zwar nicht an ihn gerichteten, aber von ihm abgefangenen originären E-Mail 28 - als Antwort-E-Mail mit ggfls. schädlichem Inhalt - generiert (und zurückversandt) wurde.

Hierzu vergleicht der E-Mail-Filter 2 bzw. das Verfahren den Adressat 32 der vormalig/ursprünglich versandten, originären E-Mail 28, "Max.Mustermann@mustermann.de", und den Absender 30 der eingehenden E-Mail 8, "Max.Mustermann@nustermann.de".

FIG 2 verdeutlicht diesen Vergleich, welcher hier unmittelbar aus der eingehenden E-Mail 8 heraus erfolgt. Der E-Mail-Filter 2 bzw. das Verfahren sucht sich hierzu einerseits in dem Header 24 der eingehenden E-Mail 8 dortigen Absender 30, "Max.Mustermann@nustermann.de", sowie andererseits im Header 24 der originär, gesendeten E-Mail 28 (in der E-Mail Historie/E-Mail-Verlauf 26) dortigen Adressaten 32, "Max.Mustermann@mustermann.de".

Alternativ könnte dies auch unter Verwendung einer im Rechnernetz 6 gespeicherten Sicherheitskopie der originären, ursprünglich versandten E-Mail geschehen, woraus dann hier der Adressat (hier: "Max.Mustermann@mustermann.de") zu bestimmen wäre. Wie zuvor, der Absender wäre aber weiter aus der empfangenen E-Mail zu bestimmen (hier: "Max.Mustermann@nustermann.de")

Wird bei dem Vergleich, wie hier (vgl. FIG 2), ein Unterschied festgestellt, nämlich ein geänderter Buchstabe, "n" in "Max.Mustermann@nustermann.de" anstelle eines "m" in "Max.Mustermann@mustermann.de", erfolgt eine Hinweisaktion, beispielsweise ein Ausgeben eines optischen oder akustischen Warnhinweises, wie beispielsweise ein Hinweis auf eine potenziell schädliche oder betrügerische E-Mail.

Würde der E-Mail-Filter 2 bzw. das Verfahren keinen Unterschied bei Absender 30 und Adressat 32 feststellen, würde die eingehende E-Mail 8 als authentisch, insbesondere als authentische Antwort-E-Mail, klassifiziert werden.

Für den Fall, dass der E-Mail-Filter 2 bzw. das Verfahren die eingehende E-Mail 8 nicht als Antwort-E-Mail klassifiziert hätte, führt der E-Mail-Filter 2 bzw. das Verfahren eine Bestandsprüfung bei der eingehenden E-Mail 8 durch.

Bei dieser Bestandsprüfung vergleicht der E-Mail-Filter 2 bzw. das Verfahren den Absender 30 der eingehenden E-Mail 8, hier "Max.Mustermann@nustermann.de", mit anderen bei dem/in dem Rechnernetz 6 bekannten bzw. bekannt vorliegenden E-Mail-Adressaten.

Dazu greift der E-Mail-Filter 2 auf ein in dem Rechnernetz 6 geführtes "Adressbuch" zu, in welchem bisherige bei dem Rechnernetz 6 bekannte (externe) Adressen (von externen Adressaten) gespeichert sind.

Wenn bei dem Vergleich bei der Bestandsprüfung dann kein gleicher bzw. identischer oder ähnlicher Adressat im Adressbuch gefunden wird, klassifiziert der E-Mail-Filter 2 bzw. das Verfahren die eingehende E-Mail 8 als neuen E-Mail-Kontakt und kennzeichnet die eingehende E-Mail 8 mit einem Warnhinweis, z.B. "Warnung: Dies ist eine E-Mail von einem bis dato unbekannten Absender. Bitte, überprüfen Sie den Absender. Klicken Sie insbesondere nicht auf Links und öffnen Sie keine Anhänge, es sei denn, Sie erkennen den Absender und/oder wissen, dass der Inhalt sicher ist.".

Wird ein identischer Adressat im Adressbuch gefunden, so klassifiziert der E-Mail-Filter 2 bzw. das Verfahren die eingehende E-Mail 8 als authentisch (von einem bereits bekannten E-Mail-Kontakt) - und lässt die eingehende E-Mail 8 ins Rechnernetz 6.

Stellt der E-Mail-Filter 2 bzw. das Verfahren bei der Bestandsprüfung der eingehenden E-Mail 8 eine bestimmte Ähnlichkeit bzw. einen bestimmten Grad an Ähnlichkeit (bzw. Grad an Unterschiedlichkeit) fest, beispielsweise eine große Ähnlichkeit (bzw. einen geringen Unterschied), wie beispielsweise (nur) einen unterschiedlichen Buchstaben (vgl. oben, z.B. "n" in "Max.Mustermann@nustermann.de" anstelle eines "m" in "Max.Mustermann@mustermann.de"), erfolgt ein Hinweis auf eine potenziell schädliche oder betrügerische E-Mail.

Wenn der Grad des Unterschiedes und/oder Ähnlichkeit einen großen Unterschied und/oder geringe bis gar keine Ähnlichkeit anzeigt, kann - könnte man von einem bis dato unbekannten E-Mail-Kontakt ausgehen - wiederum ein Hinweis auf einen potenziell neuen E-Mail-Kontakt erfolgen, z.B. "Warnung: Dies ist eine E-Mail von einem bis dato unbekannten Absender. Bitte, überprüfen Sie den Absender. Klicken Sie insbesondere nicht auf Links und öffnen Sie keine Anhänge, es sei denn, Sie erkennen den Absender und/oder wissen, dass der Inhalt sicher ist.".

### Alternative Sicherheits-Struktur/-Architektur für den E-Mail-Filter

FIG 3 zeigt eine alternative Sicherheits-Struktur/- Architektur 34 für den E-Mail-Filter 2 bei dem Rechnernetz 6.

Wie FIG 3 verdeutlicht, sieht die Sicherheits-Struktur 34 ein DMZ 36 - mit Firewall-Konzept vor. In diesem Fall trennt eine Firewall 4 das Internet 20 von der DMZ 36. In der DMZ 36 ist dann der E-Mail-Filter 2 angeordnet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: E-Mail-Filter
- 4: Firewall
- 6: (internes) (Firmen-/Unternehmen-)Rechnernetz/Netzwerk
- 8: (eingehende) E-Mail
- 10: PC, Computer

- 12: Drucker
- 14: Kabel
- 16: Switch
- 18: Server
- 20: Internet, externes Netz, WAN

- 22: Betreff-Angabe/-Zeile ("Betreff"), Betreff
- 24: Header
- 26: E-Mail-Verlauf, E-Mail-Historie
- 28: vormalig gesendete/ursprüngliche bzw. originäre E-Mail
- 30: Versender, Absender ("Von")

- 32: Adressat ("An")
- 34: Sicherheits-Struktur/-Architektur
- 36: DMZ

## Patentansprüche

1. **Verfahren** zum Schutz vor potenziell schädlichen oder betrügerischen E-Mails,
**bei dem**
eine bei einem Empfänger eingehende E-Mail daraufhin überprüft wird, ob es sich bei der eingehenden E-Mail um eine Antwort-E-Mail auf eine von dem Empfänger der eingehenden E-Mail vormalig versandte E-Mail handelt,
- wenn die eingehende E-Mail als Antwort-E-Mail klassifiziert wurde, der Adressat der versandten E-Mail und der Absender der eingehenden E-Mail verglichen wird und/oder
- wenn die eingehende E-Mail nicht als Antwort-E-Mail klassifiziert wurde, der Absender der eingehenden E-Mail einer Bestandsprüfung unterzogen wird.

2. Verfahren nach einem der voranstehenden Ansprüche, **dadurch gekennzeichnet, dass**
- wenn bei dem Vergleich des Adressaten der versandten E-Mail und des Absenders der eingehenden E-Mail (im Falle einer als Antwort-E-Mail klassifizierten eingehenden E-Mail) ein Unterschied festgestellt wird, eine Hinweisaktion, beispielsweise ein Ausgeben eines optischen oder akustischen Warnhinweises, insbesondere ein Hinweis auf eine potenziell schädliche oder betrügerische E-Mail, erfolgt und/oder
- wenn bei dem Vergleich des Adressaten der versandten E-Mail und des Absenders der eingehenden E-Mail (im Falle einer als Antwort-E-Mail klassifizierten eingehenden E-Mail) kein Unterschied festgestellt wird, die eingehende E-Mail als authentisch, insbesondere als authentische Antwort-E-Mail, klassifiziert wird.

3. Verfahren nach einem der voranstehenden Ansprüche, **dadurch gekennzeichnet, dass**
bei der Bestandsprüfung (im Falle einer als Nicht-Antwort-E-Mail klassifizierten eingehenden E-Mail) der Absender der eingehenden E-Mail mit anderen bei dem Empfänger bekannten bzw. bekannt vorliegenden E-Mail-Adressaten verglichen wird.

4. Verfahren nach einem der voranstehenden Ansprüche, **dadurch gekennzeichnet, dass**
- wenn bei dem Vergleich bei der Bestandsprüfung ein Unterschied festgestellt wird, eine Hinweisaktion, beispielsweise ein Ausgeben eines optischen oder akustischen Warnhinweises, durchgeführt wird und/oder
- wenn bei dem Vergleich bei der Bestandsprüfung kein Unterschied festgestellt wird, die eingehende E-Mail als authentisch klassifiziert wird.

5. Verfahren nach einem der voranstehenden Ansprüche, **dadurch gekennzeichnet, dass**
- wenn bei dem Vergleich bei der Bestandsprüfung ein Unterschied festgestellt wird, ein Grad des Unterschiedes und/oder einer Ähnlichkeit bestimmt wird und
- abhängig von dem Grad des Unterschiedes und/oder der Ähnlichkeit eine bestimmte Hinweisaktion, beispielsweise ein Ausgeben eines bestimmten optischen oder akustischen Warnhinweises, durchgeführt wird.

6. Verfahren nach einem der voranstehenden Ansprüche, **dadurch gekennzeichnet, dass**
- wenn der Grad des Unterschiedes und/oder der Ähnlichkeit einen geringen Unterschied und/oder eine große Ähnlichkeit anzeigt, ein Hinweis auf eine potenziell schädliche oder betrügerische E-Mail erfolgt, und/oder
- wenn der Grad des Unterschiedes und/oder Ähnlichkeit einen großen Unterschied und/oder geringe bis gar keine Ähnlichkeit anzeigt, ein Hinweis auf einen potenziell neuen E-Mail-Kontakt erfolgt.

7. Verfahren nach einem der voranstehenden Ansprüche, **dadurch gekennzeichnet, dass**
(Über-) Prüfungen, Vergleiche und/oder Klassifikationen sowie die Generierung von Hinweisen, Hinweisaktion und/oder Warnhinweisen bei dem Verfahren unter Verwendung einer KI durchgeführt werden.

8. Verfahren nach einem der voranstehenden Ansprüche, **dadurch gekennzeichnet, dass**
wenn für eine eingehende E-Mail ein Hinweis, eine Hinweisaktion und/oder ein Warnhinweis erfolgt bzw. wenn eine eingehende E-Mail als nicht-authentisch klassifiziert wird, die eingehende E-Mail gelöscht oder gesondert, insbesondere in einem Quarantäne-Bereich, gespeichert wird.

9. Verfahren nach einem der voranstehenden Ansprüche, **dadurch gekennzeichnet, dass**
die Überprüfung, ob es sich bei der eingehenden E-Mail um eine Antwort-E-Mail auf eine von dem Empfänger der eingehenden E-Mail vormalig versandte E-Mail handelt, unter Verwendung einer Betreff-Angabe und/oder eines Absenders bzw. eines Adressaten und/oder eines E-Mail-Verlauf und/oder E-Mail-Historie bei der eingehenden E-Mail durchgeführt wird.

10. Verfahren nach einem der voranstehenden Ansprüche, **ausgeführt**
bei eingehenden E-Mails zwischen einer Firewall und einem internen Netzwerk.

11. Verfahren nach einem der voranstehenden Ansprüche, **dadurch gekennzeichnet, dass**
zusätzlich eine Überprüfung des Inhalts der eingehenden E-Mail auf bekannte Schadsoftware-Signaturen durchgeführt wird.

12. Verfahren nach einem der voranstehenden Ansprüche, **dadurch gekennzeichnet, dass**
zusätzlich eine Überprüfung der eingehenden E-Mail auf ungewöhnliche Verhaltensweisen, wie z.B. ungewöhnlich häufiges Senden von Nachrichten oder ungewöhnlich große Dateianhänge, durchgeführt wird.

13. **System** zum Schutz vor potenziell schädlichen oder betrügerischen E-Mails,
**eingerichtet zur**
Durchführung eines Verfahrens nach einem der voranstehenden Ansprüche.

14. System nach einem der voranstehenden Ansprüche,
**dadurch gekennzeichnet, dass**
das System zusätzlich Funktionen zur Überprüfung des Inhalts der eingehenden E-Mail auf bekannte Schadsoftware-Signaturen und/oder ungewöhnliche Verhaltensweisen aufweist.

15. System nach einem der voranstehenden Ansprüche,
**dadurch gekennzeichnet, dass**
das System unter Verwendung einer Software, welche insbesondere als Server-Installation oder als Cloud-Software oder als Applikations-Software bereitgestellt wird, realisiert ist.
